# EUROPÄISCHE PATENTSCHRIFT

(11) **EP 2 674 254 B1**
(45) Veröffentlichungstag und Bekanntmachung des Hinweises auf die Patenterteilung: **02.11.2016**
(21) Anmeldenummer: 13171679.7
(22) Anmeldetag: 12.06.2013
(51) Int. Cl.: B25D 13/00, H01F 7/16, H02K 33/12

(54) **Werkzeugmaschine**
Machine tool
Machine-outil

(30) Priorität: 15.06.2012 DE 102012210104
(43) Veröffentlichungstag der Anmeldung: 18.12.2013
(73) Patentinhaber: HILTI Aktiengesellschaft, 9494 Schaan (LI)
(72) Erfinder: Binder, Albert, 9470 Buchs (CH); Hakenholt, Christoph, 6800 Feldkirch (AT); Kuntner, Jochen, 6850 Dornbirn (AT)
(74) Vertreter: Hilti Aktiengesellschaft Corporate Intellectual Property

(56) Entgegenhaltungen:
- DE-A1- 4 403 420
- DE-A1-102007 000 386
- GB-A- 2 205 003
- US-A- 5 389 910

## Beschreibung

### GEBIET DER ERFINDUNG

Die vorliegende Erfindung betrifft eine Werkzeugmaschine, die ein meißelndes Werkzeug antreiben kann. Ein Schläger wird unmittelbar durch Magnetspulen beschleunigt und schlägt auf das Werkzeug. Werkzeugmaschinen dieses Typs sind beispielsweise aus der Publikation US 2010/0206593 bekannt.

Eine dem Oberbegriff von Anspruch 1 entsprechende Werkzeugmaschine ist in DE 10 2007 000386 A1 beschrieben. Das Schlagwerk hat zwei hohlen Magnetspulen, welche einen in ihnen geführten Schläger beschleunigen. Ein Döpper ragt in eine der beiden Magnetspulen hinein und nimmt den Schlag des Schlägers auf, um den Schlag auf ein Werkzeug zu übertragen.

### OFFENBARUNG DER ERFINDUNG

Die erfindungsgemäße Werkzeugmaschine gemäß Anspruch 1 hat eine Werkzeugaufnahme, die eingerichtet ist ein meißelndes Werkzeug längs einer Bewegungsachse beweglich zu lagern. Ein magneto-pneumatisches Schlagwerk beinhaltet einen primären Antrieb, der um die Bewegungsachse angeordnet und in Schlagrichtung aufeinanderfolgend eine erste Magnetspule, einen Ringmagneten und eine zweite Magnetspule aufweist. Das Schlagwerk hat auf der Bewegungsachse innerhalb der Magnetspulen, und in Schlagrichtung aufeinanderfolgend einen Schläger und einen Döpper. Eine Luftfeder wirkt in Schlagrichtung auf den Schläger. Die Luftfeder kann beispielsweise teilweise oder vollständig innerhalb der ersten Magnetspule angeordnet sein. Der Ringmagnet ist permanent magnetisch und bezogen auf die Bewegungsachse radial magnetisiert. Der Ringmagnet ist beispielsweise aus mehreren Permanentmagneten zusammengesetzt, die alle mit einem Magnetpol, z.B. Nordpol (N), der Bewegungsachse zugewandt und mit einem anderen Magnetpol, z.B. Südpol (S) von der Bewegungsachse abgewandt ausgerichtet sind.

Die im Wesentlichen längs der radialen Richtung orientierten Permanentmagnete erzeugen ein Magnetfeld, welches innerhalb der ersten Magnetspule und der zweiten Magnetspule in die entgegengesetzte Richtung läuft. Diese Asymmetrie kann genutzt werden, um die Magnetfeldstärke innerhalb der beiden Magnetspulen gegenphasig auf einen hohen und einen geringen Wert zu setzen. Der Gradient der Magnetfeldstärke bewegt den Schläger basierend auf der Reluktanzkraft.

Eine bevorzugte Ausgestaltung sieht vor, dass ein in die erste Magnetspule eingespeister Strom und ein in die zweite Magnetspule eingespeister Strom die gleiche Umlaufrichtung um die Bewegungsachse aufweisen. Die von der ersten Magnetspule und von der zweiten Magnetspule erzeugten Magnetfelder sind beide parallel oder beide antiparallel zu der Schlagrichtung orientiert.

Eine bevorzugte Ausgestaltung sieht vor, dass eine Steuerung die Magnetspulen, in alternierenden Phasen, ansteuert. Ein von der ersten Magnetspule innerhalb der ersten Magnetspule erzeugtes erstes Magnetfeld ist in einer ersten Phase konstruktiv und in einer zweiten Phase destruktiv mit dem Magnetfeld des Ringmagnets überlagert ist und ein von der zweiten Magnetspule innerhalb der zweiten Magnetspule erzeugtes zweites Magnetfeld ist in der ersten Phase destruktiv und der zweiten Phase konstruktiv mit dem Magnetfeld des Ringmagnets überlagert.

Der Schläger kann aus einem weichmagnetischen Material sein. Der Schläger erzeugt selbst kein Magnetfeld. Eine Restmagnetisierung des Schlägers klingt schnell ab oder ist von der Feldstärke um wenigstens eine Größenordnung geringer als die Feldstärke der Magnetspulen oder des Ringmagnets. Der Schläger wird basierend auf einer Reluktanzkraft von den Magnetfeldern getrieben. Der Döpper ist vorzugsweise ebenfalls aus einem weichmagnetischen Material.

Eine bevorzugte Ausgestaltung sieht vor, dass der Döpper in die zweite Magnetspule oder in ein an die zweite Magnetspule in Schlagrichtung anliegendes Joch hineinragt. Der magnetisierbare Döpper lenkt das Magnetfeld. Das von der zweiten Magnetspule erzeugte Magnetfeld tritt im Wesentlichen parallel zu der Schlagrichtung aus dem Döpper aus, d.h. verläuft im Wesentlichen senkrecht zu der Stirnfläche des Döpper. Das von dem Ringmagnet erzeugte Magnetfeld tritt ebenfalls im Wesentlichen senkrecht zu der Stirnfläche in den Döpper ein. Hierdurch ist eine hohe Feldstärke nahe der Stirnfläche möglich.

Eine bevorzugte Ausgestaltung sieht vor, dass die Luftfeder durch einen stationären Verschluss entgegen der Schlagrichtung abgeschlossen ist. Der stationäre Verschluss ist gegenüber den Magnetspulen, der Werkzeugaufnahme etc. unbeweglich. Die pneumatische Kammer der Luftfeder ist bis auf eine Belüftungsöffnung von der Umgebung isoliert. Die Belüftungsöffnung ist auf axialer Höhe eines dem Ringmagnet zugewandten Ende der ersten Magnetspule.

Eine bevorzugte Ausgestaltung sieht vor, dass der Schläger in jeder Stellung teilweise mit wenigstens einer der Magnetspulen, und teilweise mit dem Ringmagnet überlappt. Der Schläger kann vorzugsweise in jeder Stellung mit einem Teil in die erste Magnetspule und mit einem anderen Teil in die zweite Magnetspule hineinragen.

Eine bevorzugte Ausgestaltung sieht vor, dass eine erste Länge der ersten Magnetspule geringer als eine zweite Länge der zweiten Magnetspule ist, insbesondere liegt ein Verhältnis der zweiten Länge zu der ersten Länge zwischen 1,75 bis 2,25. Die Asymmetrie erweist sich als günstiger für eine hohe Schlagenergie.

Eine bevorzugte Ausgestaltung sieht vor, dass die erste Magnetspule, der Ringmagnet und die zweite Magnetspule um ein zu der Bewegungsachse koaxial ausgerichtetes Führungsrohr angeordnet sind und die Luftfeder, der Schläger und der Döpper innerhalb des Führungsrohrs angeordnet sind.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Elektromeißel
Fig. 2 ein Schlagwerk des Elektromeißels
Fig. 3 Bewegung von Schläger und Döpper
Fig. 4 Schnitt durch das Schlagwerk in der Ebene IV-IV
Fig. 5 elektrische Verschaltung des Schlagwerks
Fig. 6 Steuerungsdiagramm

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

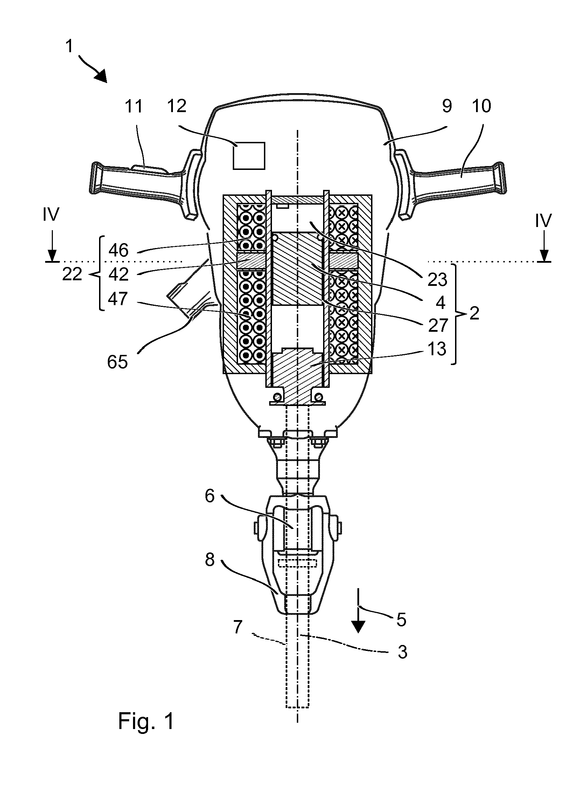

Fig. 1 zeigt einen handgehaltenen Elektromeißel **1** als Beispiel für eine meißelnde Werkzeugmaschine. Ein magneto-pneumatisches Schlagwerk **2** erzeugt mittels eines auf einer Bewegungsachse **3** geführten Schlägers **4** periodisch oder aperiodisch Schläge in eine Schlagrichtung **5.** Eine Werkzeugaufnahme **6** hält auf der Bewegungsachse **3** an dem Schlagwerk **2** anliegend ein Meißelwerkzeug **7.** Das Meißelwerkzeug **7** ist in der Werkzeugaufnahme **6** längs der Bewegungsachse **3** beweglich geführt und kann in Schlagrichtung **5** angetrieben von den Schlägen in z.B. einen Untergrund eindringen. Eine Verriegelung **8** begrenzt die axiale Bewegung des Meißelwerkzeuges **7** in der Werkzeugaufnahme **6.** Die Verriegelung **8** ist beispielsweise ein schwenkbarer Bügel und ist vorzugsweise ohne Hilfsmittel manuell entriegelbar, um das Meißelwerkzeug **7** austauschen zu können.

Das Schlagwerk **2** ist in einem Maschinengehäuse **9** angeordnet. Ein an dem Maschinengehäuse **9** angelegter Handgriff **10** ermöglicht dem Anwender den Elektromeißel **1** zu halten und im Betrieb zu führen. Ein Systemschalter **11,** mit welchem der Anwender das Schlagwerk **2** in Betrieb nehmen kann, ist vorzugsweise am Handgriff **10** angebracht. Der Systemschalter **11** aktiviert beispielsweise eine Steuerung **12** des Schlagwerks **2.**

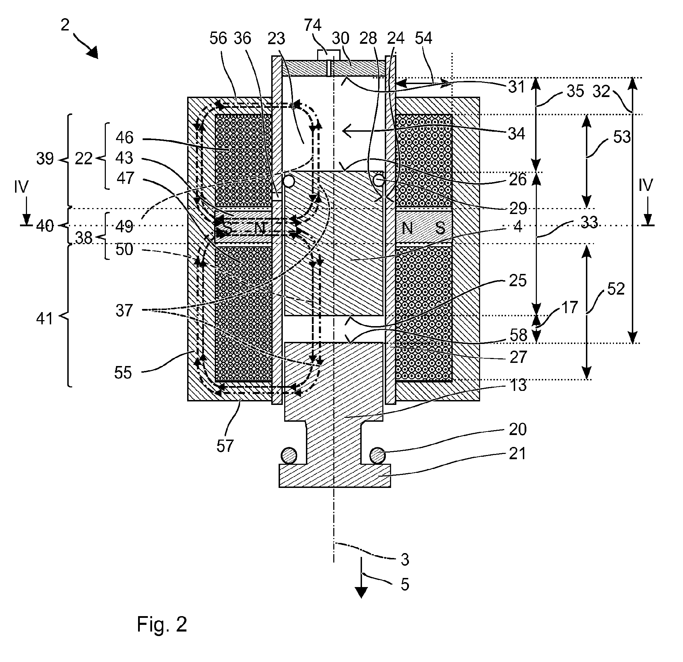

Fig. 2 zeigt das magneto-pneumatisches Schlagwerk **2** im Längsschnitt. Das Schlagwerk **2** hat nur zwei bewegliche Komponenten: einen Schläger **4** und einen Döpper **13.** Der Schläger **4** und der Döpper **13** liegen auf der gemeinsamen Bewegungsachse **3;** der Döpper **13** folgt in Schlagrichtung **5** auf den Schläger **4.** Der Schläger **4** wird zwischen einem Schlagpunkt **14** und einem oberen Wendepunkt **15** auf der Bewegungsachse **3** hin- und herbewegt.

Bei dem Schlagpunkt **14** trifft der Schläger **4** auf den Döpper **13** auf. Die Position des Schlagpunkt **14** längs der Achse ist durch den Döpper **13** vorgegeben. Der Döpper **13** ruht vorzugsweise in seiner Grundstellung **16** und kehrt vorzugsweise nach jedem Schlag in diese Grundstellung **16** zurück, bevor der Schläger **4** ein nächstes Mal auf den Döpper **13** aufschlägt. Dieser bevorzugte Betrieb wird für die nachfolgende Beschreibung unterstellt. Das magneto-pneumatische Schlagwerk **2** hat jedoch, im Gegensatz zu einem herkömmlichen pneumatischen Schlagwerk **2,** eine hohe Toleranz gegenüber der tatsächlichen Position des Döppers **13.** Dieser kann bei einem Schlag noch in Schlagrichtung **5** gegenüber der Grundstellung **16** ausgerückt sein. Die Grundstellung **16** gibt somit längs der Schlagrichtung **5** die früheste Position an, an welcher der Schläger **4** auf den Döpper **13** aufschlagen kann.

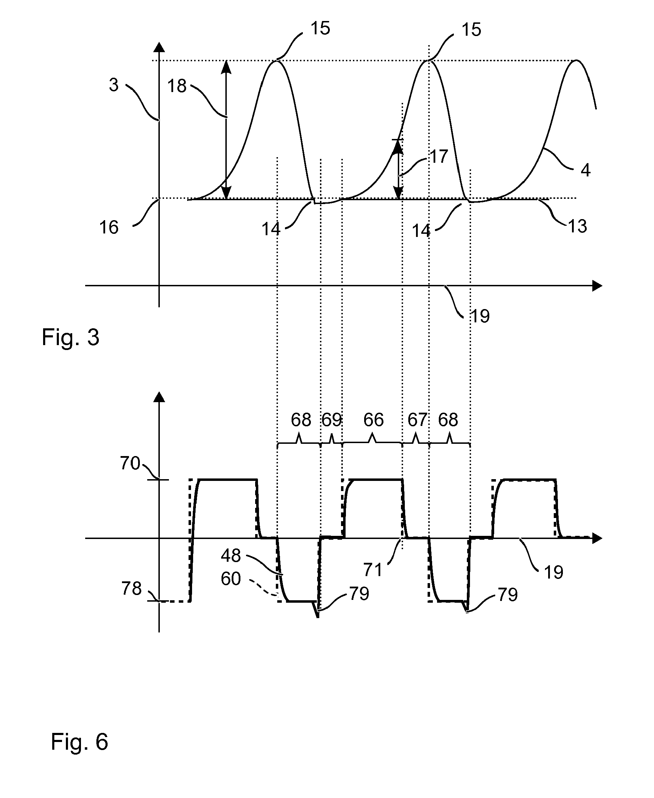

Der Abstand **17** des Schlägers **4** zum Döpper **13** ist im oberen Wendepunkt **15** am größten, eine dabei von dem Schläger **4** zurückgelegte Distanz wird nachfolgend als Hub **18** bezeichnet. Fig. 3 illustriert schematisch die Bewegung des Schlägers **4** und des Döppers **13** bei drei aufeinanderfolgenden Schlägen über die Zeit **19.**

In seiner Ruhestellung liegt der Schläger **4** typischerweise an dem Döpper **13** an. Für einen Schlag wird der Schläger **4** gegen die Schlagrichtung **5** zurückbewegt und nach Erreichen des oberen Wendepunkts **15** in Schlagrichtung **5** beschleunigt. Der Schläger **4** prallt am Ende seiner Bewegung in Schlagrichtung **5** im Schlagpunkt **14** auf den Döpper **13.** Der Döpper **13** nimmt deutlich mehr als die Hälfte der kinetischen Energie des Schlägers **4** auf und wird in Schlagrichtung **5** ausgelenkt. Der Döpper **13** schiebt das an ihm anliegende Meißelwerkzeug **7** in Schlagrichtung **5** vor sich her in den Untergrund. Der Anwender presst das Schlagwerk **2** in Schlagrichtung **5** gegen den Untergrund, wodurch der Döpper **13,** vorzugsweise mittelbar durch das Meißelwerkzeug **7,** in seine Grundstellung **16** zurückgeschoben wird. Der Döpper **13** liegt in der Grundstellung in Schlagrichtung **5** an einem gehäusefesten Anschlag **20** an. Der Anschlag **20** kann beispielsweise ein Dämpfelement enthalten. Der beispielhafte Döpper **13** hat radial vorstehende Flügel **21,** welche an dem Anschlag **20** anliegen können.

Der Schläger **4** wird berührungslos von einem magnetischen, primären Antrieb **22** angetrieben. Der primäre Antrieb **22** hebt den Schläger **4** entgegen der Schlagrichtung **5** an. Wie nachfolgend ausgeführt ist der primäre Antrieb **22** vorzugsweise nur zeitweise während des Anhebens des Schlägers **4** zu dem oberen Wendepunkt **15** aktiv. Der primäre Antrieb **22** beschleunigt den Schläger **4** nach Überschreiten des oberen Wendepunkt **15** bis zum Erreichen des Schlagpunkts **14.** Der primäre Antrieb **22** kann etwa zeitgleich mit dem Überschreiten des oberen Wendepunkts **15** aktiviert werden. Vorzugsweise bleibt der primäre Antrieb **22** bis zum Schlag aktiv. Eine Luftfeder **23** unterstützt den primären Antrieb **22** während der Bewegung des Schlägers **4** in Schlagrichtung **5,** ab dem oberen Wendepunkt bis kurz vor dem Schlagpunkt. Die Luftfeder **23** ist auf der Bewegungsachse **3** in Schlagrichtung **5** vor dem Schläger **4** angeordnet und wirkt auf den Schläger **4.**

Der Schläger **4** besteht hauptsächlich aus einem zylindrischen Grundkörper, dessen Mantelfläche **24** parallel zu der Bewegungsachse **3** ist. Eine vordere Stirnfläche **25** weist in Schlagrichtung **5.** Die vordere Stirnfläche **25** ist eben und überdeckt den gesamten Querschnitt des Schlägers **4.** Eine hintere Stirnfläche **26** ist vorzugsweise ebenfalls eben. Der Schläger **4** ist in ein Führungsrohr **27** eingesetzt. Das Führungsrohr **27** ist koaxial zu der Bewegungsachse **3** und hat eine zylindrische Innenwand **28.** Die Mantelfläche **24** des Schlägers **4** liegt an der Innenwand **28** an. Der Schläger **4** ist in dem Führungsrohr **27** auf der Bewegungsachse **3** zwangsgeführt. Ein Querschnitt des Schlägers **4** und ein Hohlquerschnitt des Führungsrohrs **27** sind bis auf ein geringes Laufspiel passgenau aufeinander abgestimmt. Der Schläger **4** verschließt gleich einer fliegenden Dichtung das Führungsrohr **27.** Ein Dichtungsring **29** aus Gummi kann in die Mantelfläche **24** eingesetzt Toleranzen in der Fertigung ausgleichen.

Das Führungsrohr **27** ist an seinem in Schlagrichtung **5** vorderen Ende geschlossen. Bei der beispielhaften Ausführungsform ist ein Verschluss **30** in das Führungsrohr **27** eingesetzt, dessen Querschnitt dem Hohlquerschnitt des Führungsrohrs **27** entspricht. Die nach innen gerichtete Verschlussfläche **31** ist vorzugsweise eben und senkrecht zu der Bewegungsachse **3.** Der Verschluss **30** ist in einem festen Abstand **32** zu dem in der Grundstellung **16** ruhenden Döpper **13** angebracht. Der Hohlraum zwischen dem Verschluss **30** und dem Döpper **13,** in Grundstellung **16,** ist der für den Schläger **4** effektive Bereich des Führungsrohrs **27,** innerhalb dem der Schläger **4** sich bewegen kann. Der maximale Hub **18** ist im wesentlichen der Abstand **32** abzüglich der Länge **33** des Schlägers **4.**

Das einseitig geschlossene Führungsrohr **27** und der Schläger **4** schließen eine pneumatische Kammer **34** ab. Ein Volumen der pneumatischen Kammer **34** ist proportional zu einem Abstand **35** zwischen der Verschlussfläche **31** und der hinteren Stirnfläche **26** des Schlägers. Das Volumen ist aufgrund des längs der Bewegungsachse **3** beweglichen Schlägers **4** variabel. Die bei einer Bewegung in der pneumatischen Kammer **34** komprimierte oder dekomprimierte Luft ergibt die Wirkung der Luftfeder **23.** Das maximale Volumen nimmt die pneumatische Kammer **34** im Schlagpunkt **14** ein, d.h. wenn der Schläger **4** auf den Döpper **13** trifft. Der Druck in der pneumatischen Kammer **34** ist hierbei am geringsten und vorteilhafterweise gleich dem Umgebungsdruck. Die potentielle Energie der Luftfeder **23** sei im Schlagpunkt **14** definitionsgemäß gleich Null. Das geringste Volumen erreicht die pneumatische Kammer **34** im oberen Wendepunkt **15** des Schlägers **4;** der Druck kann auf etwa 16 bar ansteigen. Der Hub des Schlägers **4** wird durch ein Steuerungsverfahren begrenzt, um das Volumen und den Druck der pneumatischen Kammer **34** im oberen Wendepunkt **15** auf einen Zielwert einzustellen. Die potentielle Energie der Luftfeder **23** soll im oberen Wendepunkt **15** in einem engen Wertebereich liegen, unabhängig von äußeren Einflüssen. Insbesondere wird hierdurch das Schlagwerk **2** robust gegenüber der Position des Döppers **13** beim Schlag, obwohl dessen Position einen großen Einfluss auf die Flugdauer des Schlägers **4** bis zu dem oberen Wendepunkt **15** hat.

Die Luftfeder **23** ist mit einer oder mehreren Belüftungsöffnungen **36** versehen, um Verluste der Luftmenge in der Luftfeder **23** auszugleichen. Die Belüftungsöffnungen **36** sind während der Kompression der Luftfeder **23** durch den Schläger **4** verschlossen. Vorzugsweise gibt der Schläger **4** die Belüftungsöffnungen **36** kurz vor dem Schlagpunkt **14** frei, wenn der Druck in der Luftfeder **23** sich um weniger als 50 % von dem Umgebungsdruck unterscheidet. Bei der beispielhaften Ausgestaltung überfährt der Schläger **4** die eine Belüftungsöffnung **36,** wenn er sich um mehr als 5 % seines Hubs **18** von der Schlagposition entfernt hat.

Der primäre Antrieb **22** basiert auf Reluktanzkräften, welche auf den Schläger **4** wirken. Der Grundkörper des Schlägers **4** ist aus einem weichmagnetischen Stahl. Gegenüber einem Permanentmagnet zeichnet sich der Schläger **4** durch seine geringe Koerzitivfeldstärke von weniger als 4000 A/m, vorzugsweise weniger als 2500 A/m, aus. Ein externes Magnetfeld mit dieser geringen Feldstärke kann bereits eine Polarisation des Schlägers **4** umpolen. Ein angelegtes externes Magnetfeld zieht den magnetisierbaren Schläger **4** in Bereiche höchster Feldstärke, unabhängig von deren Polarität.

Der primäre Antrieb **22** hat längs der Bewegungsachse **3** einen Hohlraum, in den das Führungsrohr **27** eingesetzt ist. Der primäre Antrieb **22** erzeugt in dem Hohlraum und innerhalb des Führungsrohrs ein permanentes Magnetfeld **37** und ein zweiteiliges schaltbares Magnetfeld **38.** Die Magnetfelder **37, 38** unterteilen den Hohlraum und den effektiven Bereich des Führungsrohrs **27** längs der Bewegungsachse **3** in einen oberen Abschnitt **39,** einen mittleren Abschnitt **40** und einen unteren Abschnitt **41.** Feldlinien der Magnetfelder **37, 38** verlaufen in dem oberen Abschnitt **39** und dem unteren Abschnitt **41** weitgehend parallel zu der Bewegungsachse **3** und in dem mittleren Abschnitt **40** weitgehend senkrecht zu der Bewegungsachse **3.** Die Magnetfelder **37, 38** unterscheiden sich in ihrer parallelen oder antiparallelen Orientierung der Feldlinien zu der Schlagrichtung **5.** Die ausschnittsweise beispielhaft dargestellten Feldlinien (Strich-Punkt-Muster) des permanenten Magnetfeldes **37** verlaufen in dem oberen Abschnitt **39** des Führungsrohrs **27** weitgehend antiparallel zu der Schlagrichtung **5** und in einem unteren Abschnitt **41** des Führungsrohrs **27** weitgehend parallel zu der Schlagrichtung **5.** Für die Funktion des Schlagwerks **2** ist die unterschiedliche Laufrichtung der Feldlinien des permanenten Magnetfeldes **37** im oberen Abschnitt **39** verglichen zu der Laufrichtung im unteren Abschnitt **41** wesentlich. Die Feldlinien des schaltbaren Magnetfelds **38** verlaufen während einer Phase (gestrichelt dargestellt) innerhalb des oberen Abschnitts **39** und unteren Abschnitts **41** des Führungsrohrs **27** weitgehend in Schlagrichtung **5** und während einer anderen Phase (nicht dargestellt) innerhalb beider Abschnitte **39, 41** weitgehend antiparallel zu der Schlagrichtung **5.** Das permanente Magnetfeld **37** und das schaltbare Magnetfeld **38** überlagern sich somit in einem der beiden Abschnitte **39** destruktiv und dem anderen der Abschnitte **41** konstruktiv. In welchem der Abschnitte **39** sich die Magnetfelder **37, 38** konstruktiv überlagern hängt von einem aktuellen Schaltzyklus der Steuerung **12** ab. Der Schläger **4** wird jeweils in den Abschnitt **39, 41** mit konstruktiver Überlagerung gezogen. Eine alternierende Umpolung des schaltbaren Magnetfeldes **38** treibt die Hin-und-her-Bewegung des Schlägers **4.**

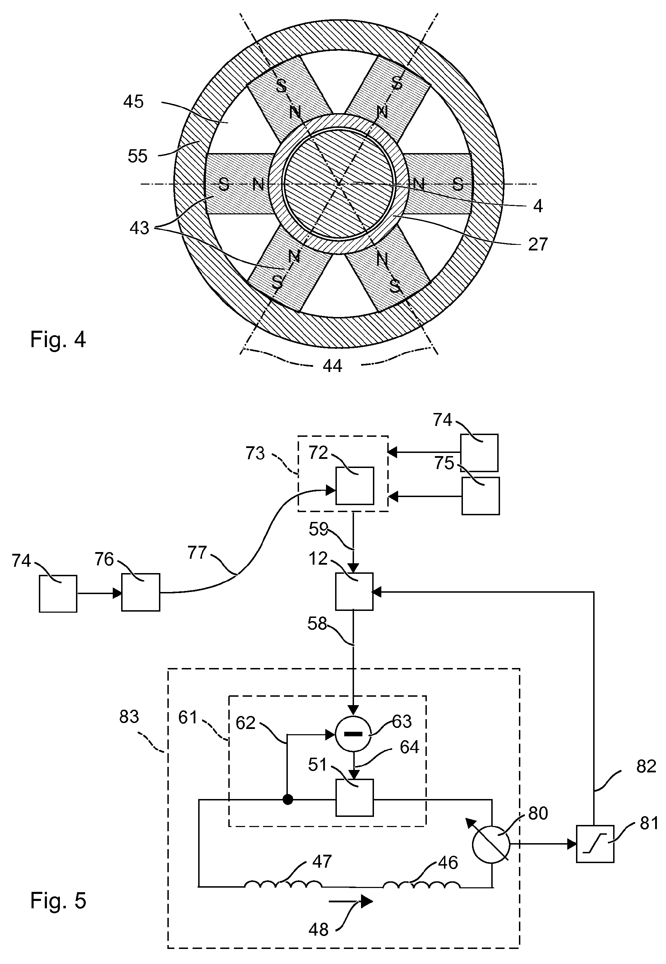

Das permanente Magnetfeld **37** wird durch einen radial magnetisierten Ringmagnet **42** aus mehreren Permanentmagneten **43** erzeugt. Fig. 4 zeigt den Ringmagnet **42** in einem Schnitt in der Ebene IV-IV. Die beispielhaften Permanentmagnete **43** sind vorzugsweise Stabmagnete. Die Permanentmagnete **43** sind in radialer Richtung orientiert. Ihre Magnetfeldachsen **44,** d.h. von deren Südpol zu Nordpol, stehen senkrecht auf der Bewegungsachse **3.** Die Permanentmagnete **43** sind alle gleich orientiert, in dem dargestellten Beispiel weist ihr Nordpol N zu der Bewegungsachse 3 hin und der Südpol S von der Bewegungsachse **3** weg. In Umfangsrichtung zwischen den Permanentmagneten **43** kann ein Luftspalt oder ein nicht-magnetisierbares Material **45,** z.B. Kunststoff sein. Der Ringmagnet **42** ist längs der Bewegungsachse **3** zwischen der Verschlussfläche **31** und dem Döpper **13** angeordnet. Vorzugsweise ist der Ringmagnet **42** asymmetrisch angeordnet, insbesondere näher an der Verschlussfläche **31** als an dem Döpper **13.** Die Position des Ringmagnets **42** unterteilt das Führungsrohr **27** längs der Bewegungsachse **3** in einen oberen Abschnitt **39,** welcher in Schlagrichtung **5** vor dem Ringmagnet **42** ist, und einen unteren Abschnitt **41,** welcher in Schlagrichtung **5** nach dem Ringmagnet **42** ist. Die Feldlinien verlaufen in dem oberen Abschnitt **39** weitgehend in die entgegengesetzte Richtung verglichen zu den Feldlinien in dem unteren Abschnitt **41.** Die Permanentmagnete **43** enthalten vorzugsweise eine Legierung aus Neodym. Die Feldstärke an den Polen der Permanentmagnete **43** liegt vorzugsweise oberhalb von 1 Tesla, z.B. bis 2 Tesla.

Das schaltbare Magnetfeld **38** wird mit einer oberen Magnetspule **46** und einer unteren Magnetspule **47** erzeugt. Die obere Magnetspule **46** ist in Schlagrichtung **5** vor dem Ringmagnet **42,** vorzugsweise unmittelbar an dem Ringmagnet **42** anliegend, angeordnet. Die obere Magnetspule **46** umschließt den oberen Abschnitt **39** des Führungsrohrs **27.** Die untere Magnetspule **47** ist in Schlagrichtung **5** nach dem Ringmagnet **42,** vorzugsweise an diesem anliegend, angeordnet und umschließt den unteren Abschnitt **41.** Die beiden Magnetspulen39, **46** werden in gleicher Umlaufrichtung um die Bewegungsachse **3** von einem Strom **48** durchflossen. Das von der oberen Magnetspule **46** erzeugte obere Magnetfeld **49** und das von der Magnetspule **47** erzeugte untere Magnetfeld **50** sind weitgehend parallel zu der Bewegungsachse **3** und beide in die gleiche Richtung längs der Bewegungsachse **3** orientiert, d.h. entweder verlaufen die Feldlinien beider Magnetfelder **49, 50** innerhalb des Führungsrohrs **27** in Schlagrichtung **5** oder entgegen der Schlagrichtung **5.** Der Strom **48** wird von einer steuerbaren Stromquelle **51** in die Magnetspulen **46, 47** eingespeist. Vorzugsweise sind die beiden Magnetspulen **46, 47** und die Stromquelle **51** in Serie geschaltet (Fig. 5).

Eine Länge **52,** d.h. Abmessung längs der Bewegungsachse **3,** der unteren Magnetspule **47** ist vorzugsweise größer als die Länge **53** der oberen Magnetspule **46,** das Längenverhältnis liegt im Bereich zwischen 1,75:1 bis 2,25:1. Die jeweiligen Beträge der Magnetspulen **46, 47** zu der Feldstärke des oberen Magnetfelds **49** bzw. zu der Feldstärke des unteren Magnetfelds **50** innerhalb des Führungsrohrs **27** sind vorzugsweise gleich. Das Verhältnis der Wicklungszahlen der oberen Magnetspule **46** zu der Wicklungszahl der unteren Magnetspule **47** kann dem Längenverhältnis entsprechen. Radiale Abmessungen **54** und eine Stromflächendichte sind vorzugsweise für beide Magnetspulen **46, 47** (ohne die anderen Komponenten des Schlagwerks) gleich.

Ein magnetisches Joch **55** kann die Magnetfelder **37, 38** außerhalb des Führungsrohrs **27** leiten. Das Joch **55** hat beispielsweise einen Hohlzylinder oder einen Käfig aus mehreren längs der Bewegungsachse **3** verlaufenden Rippen, der die beiden Magnetspulen **46, 47** und den Ringmagnet **42** aus Permanentmagneten **43** umgibt. Ein ringförmiger oberer Abschluss **56** des Jochs **55** deckt die obere Magnetspule **46** entgegen der Schlagrichtung **5** ab. Ein ringförmiger unterer Abschluss **57** grenzt auf der Höhe des Döppers **13** an das Führungsrohr **27** an. Der untere Abschluss **57** deckt die untere Magnetspule **47** in Schlagrichtung **5** ab. Die Magnetfelder **37, 38** werden in dem oberen Abschnitt **39** und dem unteren Abschnitt **41** parallel oder antiparallel zu der Bewegungsachse 3 geführt. Die Magnetfelder **37, 38** von dem Joch **55,** insbesondere der ringförmigen Abschlüsse **56, 57** in radialer Richtung eingespeist. Eine radiale Rückführung erfolgt in dem unteren Abschnitt **41** weitgehend innerhalb des Döppers **13.** Die Feldlinien stehen somit vorzugsweise weitgehend senkrecht auf der Stirnfläche **26** des Schlägers ²²²²²²²²²²²²²**4** und der Schlagfläche **58** des Döppers **13.** Die radiale Rückführung in dem oberen Abschnitt **39** kann ungeführt, d.h. über die Luft, in das Joch **56** erfolgen.

Das magnetische Joch **55** ist aus einem magnetisierbaren Material, vorzugsweise aus Elektroblech. Das Führungsrohr **27** ist nicht magnetisierbar. Geeignete Materialien für das Führungsrohr **27** umfassen Chromstahl, alternativ Aluminium oder Kunststoffe. Der Verschluss **30** des Führungsrohrs **27** ist vorzugsweise aus einem nicht-magnetisierbaren Material.

Der Schläger **4** überlappt vorzugsweise in jeder seiner Stellung mit beiden Magnetspulen **46, 47.** Insbesondere ragt die hintere Stirnfläche **26** in die obere Magnetspule **46,** wenn der Schläger **4** an dem Döpper **13** anliegt oder zumindest bis in den Ringmagnet **42.** Die hintere Stirnfläche **26** überragt wenigstens die axiale Mitte des Ringmagnets **42.** Die Belüftungsöffnung **36** der pneumatischen Kammer **34** ist auf axialer Höhe eines dem Ringmagnet **42** zugewandten Endes der oberen Magnetspule **46** angeordnet. Der Abstand **35** zu dem Ringmagnet **42** ist vorzugsweise geringer als 1 cm.

Eine Steuerung **12** des Schlagwerks **2** steuert die Stromquelle **51** an. Die Stromquelle **51** stellt den von ihr ausgegebenen Strom **48** auf einen durch die Steuerung **12** mittels eines Stellsignals **59** vorgegebenen Sollwert **60** ein. Die Stromquelle **51** beinhaltet vorzugsweise einen Regelkreis **61,** um den ausgegeben Strom **48** auf den Sollwert **60** zu stabilisieren. Ein Abgriff misst den Ist-Strom **62.** Ein Differenzverstärker **63** bildet aus dem Ist-Strom **48** und dem Sollwert **60** eine Stellgröße **64,** welche der Stromquelle **51** zum Ansteuern der Stromabgabe zugeführt ist. Die Stromquelle **51** wird von einer Stromversorgung **65,** beispielsweise einem Netzanschluss oder einem Batteriepaket, gespeist.

Die Steuerung **12** schaltet den Sollwert **60** und mittelbar den Strom **48** während einer Hin-und-Herbewegung des Schlägers **4.** Fig. 6 illustriert ein beispielhaftes sich wiederholendes Schaltmuster über die Zeit **19.** Das Schaltmuster ist im wesentlichen in drei unterschiedliche Phasen unterteilt. Ein Zyklus beginnt mit einer aktiven Rückholphase **66.** Während der aktiven Rückholphase **66** wird der Schläger **4** ausgehend von der Schlagposition entgegen die Schlagrichtung **5** beschleunigt. Die aktive Rückholphase **66** endet, wenn die Luftfeder 23 eine vorgegebene potentielle Energie erreicht hat. An die aktive Rückholphase 66 schließt sich unmittelbar eine Ruhephase **67** an, die endet wenn der Schläger **4** den oberen Wendepunkt **15** erreicht. Während oder nachdem der Schläger **4** den oberen Wendepunkt **15** überschreitet, beginnt die Beschleunigungsphase **68.** Während der Beschleunigungsphase **68** wird der Schläger **4** in Schlagrichtung **5** beschleunigt, vorzugsweise durchgehend bis der Schläger **4** auf den Döpper **13** aufschlägt. Je nach der gewünschten Schlagfrequenz kann nach der Beschleunigungsphase **68** eine Pause **69** erfolgen, bevor die nächste aktive Rückholphase 66 beginnt.

Die Steuerung **12** leitet einen neuen Schlag mit einer aktiven Rückholphase **66** ein. Die Steuerung **12** gibt der geregelten Stromquelle **51** einen ersten Wert **70** als Sollwert **60** vor. Das Vorzeichen des ersten Werts **70** legt fest, dass der Strom **48** derart in den Magnetspulen **47** umläuft, dass sich das Magnetfeld **49** der oberen Magnetspule **46** konstruktiv mit dem permanenten Magnetfeld **37** in dem oberen Abschnitt **39** des Führungsrohrs **27** überlagert. Der Schläger **4** wird nun in den oberen Abschnitt **39** entgegen der Schlagrichtung **5** und entgegen eine Kraft der Luftfeder **23** beschleunigt. Die kinetische Energie des Schlägers **4** nimmt kontinuierlich zu. Aufgrund der Rückwärtsbewegung wird zugleich die Luftfeder **23** komprimiert und die in ihr gespeicherte potentielle Energie steigt aufgrund verrichteter Volumenarbeit an.

Der Strom **48** durchläuft vorzugsweise beide Magnetspulen **46, 47.** Vorzugsweise überlagern sich die Magnetfelder **37, 38** destruktiv in dem unteren Abschnitt **41.** Der Betrag des ersten Werts **70** kann derart gewählt sein, dass das von der unteren Magnetspule **47** erzeugte Magnetfeld **50** das permanente Magnetfeld **37** der Permanentmagnete **43** destruktiv kompensiert. Die Magnetfeldstärke ist in dem unteren Abschnitt **41** vorzugsweise auf Null oder auf weniger als 10 % der Magnetfeldstärke in dem oberen Abschnitt **39** abgesenkt. Die Stromquelle **51** und die Magnetspulen **46, 47** sind für den Strom **48** mit der Stromstärke des ersten Werts **70** ausgelegt. Der erste Wert **70** kann während der aktiven Rückholphase 66 konstant gehalten sein.

Die Steuerung **12** triggert das Ende der aktiven Rückholphase **66** basierend auf einer Prognose über die potentielle Energie der Luftfeder **23** im oberen Wendepunkt **15.** Der primäre Antrieb **22** wird beispielsweise deaktiviert, wenn die potentielle Energie einen Zielwert ohne weitere Unterstützung durch den primären Antrieb **22** erreichen wird. Hierbei wird berücksichtigt, dass zum Zeitpunkt **71** des Abschaltens des primären Antriebs **22** die potentielle Energie bereits einen Teil des Zielwerts erreicht hat und die aktuelle kinetische Energie des Schlägers **4** bis zum oberen Wendepunkt **15** in den bisher fehlenden Teil des Zielwerts umgewandelt wird. Verluste bei der Wandlung können durch in einer in der Steuerung **12** abgelegten Tabelle **72** berücksichtigt sein. Der Zielwert liegt im Bereich zwischen 25 % und 40 %, z.B. wenigstens 30 % und z.B. höchstens 37 %, der Schlagenergie des Schlägers **4.**

Eine Prognoseeinrichtung **73** vergleicht fortwährend die Betriebsbedingungen des Schlagwerks **2.** Eine beispielhafte Prognose basiert auf einer Druckmessung. Die Prognoseeinrichtung **73** greift die Signale des Drucksensors **74** ab. Der gemessene Druck wird mit einem Schwellwert verglichen. Wenn der Druck den Schwellwert überschreitet, gibt die Prognoseeinrichtung **73** an die Steuerung **12** ein Steuersignal **59** aus. Das Steuersignal **59** signalisiert, dass bei sofortigem Abschalten des primären Antriebs **22** die potentielle Energie den Zielwert erreicht. Die Steuerung **12** beendet die aktive Rückholphase **66.**

Die Prognoseeinrichtung **73** lädt den Schwellwert vorzugsweise aus der abgespeicherten Nachschlagetabelle **72.** Die Nachschlagetabelle **72** kann genau einen Schwellwert enthalten. Vorzugsweise sind jedoch mehrere für unterschiedliche Betriebsbedingungen vorab bestimmte Schwellwerte hinterlegt. Beispielsweise können Schwellwerte für unterschiedliche Temperaturen in der pneumatischen Kammer **34** hinterlegt sein. Die Prognoseeinrichtung **73** nimmt neben dem Signal des Drucksensors **74** auch ein Signal eines Temperatursensors **75** auf. In Abhängigkeit letzteren wird beispielsweise der Schwellwert ausgewählt.

Weiters kann die Prognoseeinrichtung **73** aus einer Druckänderung die Geschwindigkeit des Schlägers **4** abschätzen. Die Nachschlagetabelle **72** kann für unterschiedliche Geschwindigkeiten unterschiedliche Schwellwerte für den aktuellen Druck enthalten. Da ein schnellerer Schläger **4** tendenziell die Luftfeder **23** stärker komprimiert, ist der Schwellwert für eine höhere Geschwindigkeit geringer als für eine niedrigerer Geschwindigkeit. Die Auswahl des Schwellwerts in Abhängigkeit der Geschwindigkeit oder der Druckänderung kann die Reproduzierbarkeit des Zielwerts verbessern.

Das Ende der aktiven Rückholphase **66** ist zugleich der Beginn der Ruhephase **67.** Die Steuerung **12** setzt den Sollwert **60** für den Strom **48** auf Null. Das schaltbare Magnetfeld **38** wird abgeschaltet und der primäre Antrieb **22** deaktiviert. Das permanente Magnetfeld **37** wirkt zwar auf den Schläger **4** ein. Da jedoch das permanente Magnetfeld **37** eine im wesentlichen längs der Bewegungsachse **3** konstante Feldstärke hat, übt es nur eine geringe oder keine Kraft auf den Schläger **4** aus.

Anstelle den Strom **48** auf Null abzusenken, kann der Strom **48** in der Ruhephase **67** auf einen zu dem Sollwert **60** negativen Wert gesetzt werden. Hierdurch wird die Remaneszenz in dem Schläger **4** abgebaut. Der Betrag des Stroms **48** verglichen zu dem des Sollwert **60** gering, um die Rückwärtsbewegung nicht zu stören, z.B. geringer als 10 %.

Der Schläger **4** wird während der Ruhephase **67** durch die Luftfeder **23** bis zum Stillstand abgebremst. Die potentielle Energie der Luftfeder **23** erhöht sich dabei noch um einen Teil der kinetischen Energie des Schlägers **4,** bevor der Schläger **4** zum Stillstand d.h. zu dem oberen Wendepunkt **15** gelangt.

Die Sequenz der aktiven Rückholphase **66** und der Ruhephase **67** erweist sich bei den getesteten Aufbauten des Schlagwerks als besonders energieeffizient, insbesondere das Abschalten des Stroms **48** auf Null am Ende der aktiven Rückholphase **66.** Die Effizienz des primären Antriebs **22** sinkt mit abnehmenden Abstand **35** des Schlägers **4** von dem oberen Wendepunkt **15.** Der Schläger **4** wird solange der primäre Antrieb **22** effizient wirkt auf eine hohe Geschwindigkeit beschleunigt. Zeigt die Prognose auf, dass der Schläger **4** nun ohne den primären Antrieb **22** den gewünschten oberen Wendepunkt **15** erreichen wird, wird der zunehmend ineffizient wirkende primäre Antrieb **22** deaktiviert. Bei einer Alternative wird der Strom **48** kontinuierlich oder in mehreren Schritten auf Null abgesenkt. Hierbei kann auf Kosten der Effizienz eine adaptive Anpassung der Flugbahn des Schlägers **4** zum Erreichen des oberen Wendepunkts **15** vorgenommen werden. Auch bei der Alternative schließt sich vorzugsweise die Ruhephase **67** vor Erreichen des oberen Wendepunkts **15** an.

Die Dauer der aktiven Rückholphase **66** ergibt sich aus der Prognose. Je nach Betrieb oder auch von Schlag zu Schlag kann die Dauer unterschiedlich lang ausfallen. Beispielsweise erreicht der Döpper **13** vor einem Schlag nicht seine Grundstellung **16,** wodurch der Schläger **4** für den nächsten Schlag einen größeren Weg zurücklegen muss. Bei einer festen Dauer der aktiven Rückholphase **66** würde die aufgenommene kinetische Energie für den Schläger **4** nicht bis zu dem gewünschten oberen Wendepunkt **15** gegen die Kraft der Luftfeder **23** ausreichen.

Die Steuerung **12** triggert das Ende der Ruhephase **67** basierend auf dem Erreichen des oberen Wendepunkt **15.** Mit dem Ende der Ruhephase **67** beginnt die Beschleunigungsphase **68.** Die Steuerung **12** triggert den Beginn der Beschleunigungsphase **68** anhand der Umkehrbewegung des Schlägers **4.** Ein Positions- oder Bewegungssensor kann unmittelbar die Umkehrbewegung des Schlägers **4** erfassen. Vorzugsweise basiert das Erkennen der Umkehrbewegung mittelbar über eine Druckänderung in der pneumatischen Kammer **34.**

Ein Drucksensor **74** ist mit der pneumatischen Kammer **34** gekoppelt. Der Drucksensor **74** ist beispielsweise ein piezoresistiver Drucksensor **74.** Der Drucksensor **74** kann in der pneumatischen Kammer **34** angeordnet sein oder über einen Luftkanal mit der pneumatischen Kammer **34** gekoppelt sein. Der Drucksensor **74** ist vorzugsweise an oder in dem Verschluss **30** angeordnet. Dem Drucksensor **74** ist eine Auswertungseinrichtung **76** zugeordnet. Die Auswertungseinrichtung **76** überwacht eine Druckänderung in der pneumatischen Kammer **34.** Sobald die Druckänderung einen negativen Wert annimmt, d.h. der Druck fällt, gibt die Auswertungseinrichtung **76** an die Steuerung **12** ein Steuersignal **77** aus, der das Erreichen des oberen Wendepunkts **15** durch den Schläger **4** anzeigt.

Das Auswerten der Druckänderung führt verfahrensbedingt zu einer geringfügigen Verzögerung bis das Erreichen, genauer das Überschreiten des oberen Wendepunkts **15,** erfasst wird. Der Druck kann auch absolut erfasst und mit einem Schwellwert verglichen werden. Erreicht der Druck den Schwellwert, wird die Ausgabe des Steuersignals **77** getriggert. Der Druck in der pneumatischen Kammer **34** kann im oberen Wendepunkt **15** ausgemessen und als der Schwellwert in einer Tabelle der Auswertungseinrichtung **76** hinterlegt sein. Der Schwellwert kann in Abhängigkeit verschiedener Betriebsbedingungen, insbesondere einer Temperatur in der pneumatischen Kammer **34,** abgelegt sein. Die Auswertungseinrichtung **76** ermittelt die vorliegende Betriebsbedingung, beispielsweise durch Abfragen eines Temperatursensors, und liest den zugehörigen Schwellwert aus der Tabelle aus. Die beiden Verfahren können redundant kombiniert werden und getrennt voneinander das Steuersignal **77** ausgeben.

Die Steuerung **12** beginnt die Beschleunigungsphase **68,** wenn das Steuersignal **77** empfangen wird. Die Steuerung **12** setzt den Sollwert **60** für den Strom **48** auf einen zweiten Wert **78.** Das Vorzeichen des zweiten Werts **78** ist derart gewählt, dass das untere Magnetfeld **50** der unteren Magnetspule **47** sich konstruktiv mit dem permanenten Magnetfeld **37** innerhalb des Führungsrohrs **27** überlagert. Es ergibt sich somit eine hohe Feldstärke in dem unteren Abschnitt **41** des Führungsrohrs **27.** Der Strom **48** wird während der Beschleunigungsphase **68** in die untere Magnetspule **47** und vorzugsweise in die obere Magnetspule **46** eingespeist. Das permanente Magnetfeld **37** in dem oberen Abschnitt **39** wird durch das Magnetfeld **38** der oberen Magnetspule **46** innerhalb des Führungsrohrs **27** vorzugsweise gedämpft oder vollständig destruktiv ausgeglichen. Der Schläger **4** wird in das stärkere Magnetfeld in dem unteren Abschnitt **41** gezogen. Der Schläger **4** erfährt durchgehend während der Beschleunigungsphase **68** eine Beschleunigung in Schlagrichtung 5. Die bis zum Schlagpunkt **14** erreichte kinetische Energie ist etwa die Schlagenergie des Schlägers **4.**

Eine alternatives oder zusätzliches Bestimmen des Erreichens des oberen Wendepunkts **15** basiert auf einer Änderung der in der oberen Magnetspule **46** induzierten Spannung aufgrund der Bewegung des Schlägers **4.** Der Schläger **4** kann bereits vor Erreichen des oberen Wendepunkts **15** mit dem oberen Jochring **56** überlappen. Das Magnetfeld **49** des Ringmagnets **42** fließt im oberen Bereich **39** nahezu geschlossen ohne Luftspalt über den Schläger **4** in den oberen Jochring **56.** Das Magnetfeld **50** des Ringmagnets **42** fließt im unteren Bereich **41** über einen großen Luftspalt zu dem unteren Jochring **57.** Während der Bewegung des Schlägers **4** bis zu dem Wendepunkt **15** erhöht sich der Luftspalt im unteren Bereich **41** noch weiter, wodurch der Magnetfluss sich in dem oberen Bereich anteilmäßig erhöht. Sobald der Schläger **4** im Wendepunkt **15** umkehrt, verringert sich der Anteil des Magnetflusses im oberen Bereich **39.** Die Änderung des Magnetflusses induziert in der oberen Magnetspule **46** eine Spannung. Charakteristisch für den Wendepunkt **15** ist ein Wechsel des Vorzeichens der induzierten Spannung. Die Stromquelle **51** regelt den Strom **48** vor dem Erreichen des Wendepunkts **15** vorzugsweise auf Null, um die Ruhephase **67** einzuhalten. Die Regelschleife passt fortwährend die Stellgröße **64** an, um den Stroms **48** gegen die induzierte Spannung auf Null zu halten. Auf den Wechsel des Vorzeichens der induzierten Spannung reagiert die Regelschleife **62** mit einer deutlich größeren Stellgröße **64.** Das Steuersignal **77** kann somit beispielsweise bei Überschreitens eines Schwellwerts durch die Stellgröße **64** ausgelöst werden.

Der Betrag des zweiten Werts **78** ist vorzugsweise so abgestimmt, dass das obere Magnetfeld **49** gerade das permanente Magnetfeld **37** destruktiv kompensiert oder auf wenigstens 10 % dessen Feldstärke absenkt. Der Strom **48** in den Magnetspulen **46, 47** steigt am Beginn der Beschleunigungsphase **68** auf den Sollwert **60** an. Eine Schaltflanke ist beispielsweise nur durch eine Zeitkonstante vorgegeben, welche sich aufgrund der Induktivität der Magnetspulen **46, 47** und der Rückwirkung des Schlägers ergibt. Die Steuerung **12** hält den Sollwert **60** während der Beschleunigungsphase **68** vorzugsweise durchgehend auf dem zweiten Wert **78.**

Die Luftfeder **23** unterstützt die Beschleunigung des Schlägers **4** in die Schlagrichtung **5.** Dabei wird in der Luftfeder **23** gespeicherte potentielle Energie weitgehend in kinetische Energie des Schlägers **4** umgewandelt. Im Schlagpunkt **14** ist die Luftfeder **23** vorzugsweise vollständig entspannt. Nahe dem Schlagpunkt **14** wird die Belüftungsöffnung **36** von dem Schläger **4** freigegeben. Die Belüftungsöffnung **36** führt zu einer Schwächung der Luftfeder **23** ohne deren Wirkung auf den Schläger **4** vollständig auf Null abzusenken. Die Luftfeder **23** hat zu diesem Zeitpunkt jedoch bereits deutlich mehr als 90 % ihrer potentiellen Energie auf den Schläger **4** übertragen.

Die Steuerung **12** triggert das Ende der Beschleunigungsphase **68** basierend auf einem Anstieg **79** des Stroms **48** in der unteren Magnetspule **47** bzw. des von der Stromquelle **51** eingespeisten Stroms **48.** Während sich der Schläger **4** bewegt, ergibt sich aufgrund der elektromagnetischen Induktion über der unteren Magnetspule **47** ein Spannungsabfall, gegen den die Stromquelle **51** den Strom **48** einspeist. Mit dem Schlag und dem stehenden Schläger **4** verschwindet schlagartig der Spannungsabfall. Der Strom **48** erhöht sich kurzzeitig, bis die geregelte Stromquelle **51** den Strom **48** wieder auf den Sollwert **60** einregelt.

Ein Stromsensor **80** kann den in der unteren Magnetspule **47** umlaufenden Strom **48** erfassen. Ein zugehöriger Diskriminator **81** vergleicht den gemessenen Strom **48** mit einem Schwellwert und gibt bei Überschreiten des Schwellwerts ein Endsignal **82** aus. Das Endsignal **82** zeigt der Steuerung **12** an, dass der Schläger **4** auf den Döpper **13** aufgeschlagen hat. Der Schwellwert ist beispielsweise in Abhängigkeit des zweiten Werts **78** gewählt, d.h. dem Sollwert **60** für die Beschleunigungsphase **68.** Der Schwellwert kann um 5 % bis 10 % größer als der zweite Wert **78** sein. Alternativ oder zusätzlich zu einer Erfassung des absoluten Stroms **48** kann eine Änderungsrate des Stroms **48** mit des Stromsensor **80** erfasst und mit dem Diskriminator **81** gegen einen Schwellwert für die Änderungsrate verglichen werden.

Die Stromquelle **51** wirkt mit ihrem Regelkreis **61** dem Anstieg **79** des Stroms **48** in dem Stromkreis **83** entgegen. Dabei ändert sich die Stellgröße **64.** Anstelle oder zusätzlich zu einer Änderung des Stroms **48** kann auch die Stellgröße **64** überwacht werden. Es kann sowohl der absolute Wert oder vorzugweise eine Änderungsrate der Stellgröße **64** mit einem Schwellwert verglichen werden und darauf ansprechend das Endsignal **82** ausgegeben werden.

Mit Erhalt des Endsignals **82** beendet die Steuerung **12** die Beschleunigungsphase **68.** Der Sollwert **60** wird auf Null gesetzt. Entsprechend verringert sich die Stromabgabe der Stromquelle **51** auf einen Strom **48** gleich Null. Der Schläger **4** wird nicht weiter in die Schlagrichtung **5** beschleunigt.

Die Steuerung **12** kann unmittelbar anschließend an die Beschleunigungsphase **68** oder nach einer Pause die nächste aktive Rückholphase **66** beginnen.

## Patentansprüche

1. Werkzeugmaschine (1) mit
einer Werkzeugaufnahme (6), die eingerichtet ist ein meißelndes Werkzeug (7) längs einer Bewegungsachse (3) beweglich zu lagern und
einem magneto-pneumatischen Schlagwerk (2),
das einen primären Antrieb (22), der um die Bewegungsachse (3) angeordnet und in Schlagrichtung (5) aufeinanderfolgend eine erste Magnetspule (46), einen Ringmagnet (42) und eine zweite Magnetspule (47) beinhaltet, und
das auf der Bewegungsachse (3) innerhalb der Magnetspulen (46, 47) und in Schlagrichtung (5) aufeinanderfolgend einen Schläger (4) und einen Döpper (13) aufweist und das Schlagwerk (2) eine in Schlagrichtung (5) auf den Schläger (4) wirkende Luftfeder (23) aufweist,
**dadurch gekennzeichnet, dass** der Ringmagnet permanentmagnetisch und bezogen auf die Bewegungsachse (3) radial magnetisiert ist.

2. Werkzeugmaschine (1) nach Anspruch 1, **dadurch gekennzeichnet, dass** der Ringmagnet (42) aus mehreren Permanentmagnete (43) gebildet ist, die alle mit dem gleichen Magnetpol N der Bewegungsachse (3) zugewandt angeordnet sind.

3. Werkzeugmaschine (1) nach Anspruch 1 oder 2, **dadurch gekennzeichnet, dass** ein in die erste Magnetspule (46) eingespeister Strom (48) und ein in die zweite Magnetspule (47) eingespeister Strom (48) die gleiche Umlaufrichtung um die Bewegungsachse (3) aufweisen.

4. Werkzeugmaschine (1) nach einem der vorhergehenden Ansprüche, **dadurch gekennzeichnet, dass** die Magnetspulen (46, 47) in alternierenden Phasen (68, 66) von einer Steuerung (12) angesteuert sind und ein von der ersten Magnetspule (46) innerhalb der ersten Magnetspule (46) erzeugtes erstes Magnetfeld (49) in einer ersten Phase (68) konstruktiv und in einer zweiten Phase (66) destruktiv mit dem Magnetfeld (37) des Ringmagnets (42) überlagert ist und ein von der zweiten Magnetspule (47) innerhalb der zweiten Magnetspule (47) erzeugtes zweites Magnetfeld (50) in der ersten Phase (68) destruktiv und der zweiten Phase (66) konstruktiv mit dem Magnetfeld (37) des Ringmagnets (42) überlagert ist.

5. Werkzeugmaschine (1) nach einem der vorhergehenden Ansprüche, **dadurch gekennzeichnet, dass** der Schläger (4) aus einem weichmagnetischen Material ist.

6. Werkzeugmaschine (1) nach einem der vorhergehenden Ansprüche, **dadurch gekennzeichnet, dass** die Luftfeder (23) durch einen stationären Verschluss (30) entgegen der Schlagrichtung (5) abgeschlossen ist.

7. Werkzeugmaschine (1) nach einem der vorhergehenden Ansprüche, **dadurch gekennzeichnet, dass** der Döpper (13) in die zweite Magnetspule (47) oder in ein an die zweite Magnetspule (47) in Schlagrichtung (5) anliegendes Joch (57) hineinragt.

8. Werkzeugmaschine (1) nach Anspruch 8, **dadurch gekennzeichnet, dass** der Döpper (13) aus einem weichmagnetischen Material ist.

9. Werkzeugmaschine (1) nach einem der vorhergehenden Ansprüche, **dadurch gekennzeichnet, dass** der Schläger (4) in jeder Stellung teilweise mit wenigstens einer der Magnetspulen (46, 47) und teilweise mit dem Ringmagnet (42) überlappt.

10. Werkzeugmaschine (1) nach einem der vorhergehenden Ansprüche, **dadurch gekennzeichnet, dass** eine erste Länge (52) der ersten Magnetspule (46) geringer als eine zweite Länge (53) der zweiten Magnetspule (47) ist, insbesondere liegt ein Verhältnis der zweiten Länge (53) zu der ersten Länge (52) zwischen 1,75 bis 2,25.

11. Werkzeugmaschine (1) nach einem der vorhergehenden Ansprüche, **dadurch gekennzeichnet, dass** die erste Magnetspule (46), der Ringmagnet (42) und die zweite Magnetspule (47) um ein zu der Bewegungsachse (3) koaxial ausgerichtetes Führungsrohr (27) angeordnet sind und die Luftfeder (23) und der Schläger (4) innerhalb des Führungsrohrs (27) angeordnet sind.

## Claims

1. Machine tool (1) with
a tool holder (6), which is arranged to accommodate a chiselling tool (7) so that it may move along a movement axis (3) and
a magnetopneumatic striking mechanism (2),
which contains a primary drive (22), which is arranged around the movement axis (3) and contains a first magnetic coil (46), a ring magnet (42) and a second magnetic coil (47) successively in the striking direction (5), and
which has a striker (4) and an anvil (13) successively in the striking direction (5) on the movement axis (3) within the magnetic coils (46, 47) and the striking mechanism (2) has an air spring (23) acting on the striker (4) in the striking direction (5),
**characterised in that** the ring magnet is magnetised radially with reference to the movement axis in a permanently magnetic way.

2. Machine tool (1) according to claim 1, **characterised in that** the ring magnet (42) is made of several permanent magnets (43), which are all arranged with the same magnetic pole N facing the movement axis (3).

3. Machine tool (1) according to claim 1 or 2, **characterised in that** a current (48) fed into the first magnetic coil (46) and a current (48) fed into the second magnetic coil (47) have the same direction of rotation around the movement axis (3).

4. Machine tool (1) according to one of the previous claims, **characterised in that** the magnetic coils (46, 47) are controlled in alternating phases (68, 66) by a control (12) and a first magnetic field (49) produced by the first magnetic coil (46) within the first magnetic coil (46) constructively in a first phase (68) and destructively in a second phase (66) is superimposed with the magnetic field (37) of the ring magnet (42) and a second magnetic field (50) produced by the second magnetic coil (47) within the second magnetic coil (47) destructively in the first phase (68) and constructively in the second phase (66) is superimposed with the magnetic field (37) of the ring magnet (42).

5. Machine tool (1) according to one of the previous claims, **characterised in that** the striker (4) is made of a soft magnetic material.

6. Machine tool (1) according to one of the previous claims, **characterised in that** the air spring (23) is closed off by a stationary seal (30) in the direction opposite the striking direction (5).

7. Machine tool (1) according to one of the previous claims, **characterised in that** the anvil (13) projects into the second magnetic coil (47) or into a yoke (57) lying on the second magnetic coil (47) in the striking direction (5).

8. Machine tool (1) according to claim 8, **characterised in that** the anvil (13) is made of a soft magnetic material.

9. Machine tool (1) according to one of the previous claims, **characterised in that** the striker (4) overlaps partly with at least one of the magnetic coils (46, 47) and partly with the ring magnet (42) in any position.

10. Machine tool (1) according to one of the previous claims, **characterised in that** a first length (52) of the first magnetic coil (46) is smaller than a second length (53) of the second magnetic coil (47), in particular there is a ratio of the second length (53) to the first length (52) of between 1.75 to 2.25.

11. Machine tool (1) according to one of the previous claims, **characterised in that** the first magnetic coil (46), the ring magnet (42) and the second magnetic coil (47) are arranged around a guide tube (27) aligned coaxially to the movement axis (3) and the air spring (23) and the striker (4) are arranged within the guide tube (27).

## Revendications

1. Machine-outil (1) comportant :
un mandrin (6) qui est adapté pour maintenir un outil à buriner (7) mobile le long d'un axe de mouvement (3) et
un mécanisme de percussion magnéto-pneumatique (2),
contenant un entraînement primaire (22) agencé autour de l'axe de mouvement (3) et, successivement dans une direction de percussion (5), une première bobine magnétique (46), un aimant annulaire (42) et une seconde bobine magnétique (47), et
comportant successivement sur l'axe de mouvement (3) à l'intérieur des bobines magnétiques (46, 47) et dans la direction de percussion (5), un percuteur (14) et une enclume (13), et le mécanisme de percussion (2) comporte un ressort pneumatique (23) agissant sur le percuteur (4) dans la direction de percussion (5),
**caractérisée en ce que** l'aimant annulaire est magnétiquement permanent et est aimanté radialement par rapport à l'axe de mouvement (3).

2. Machine-outil (1) selon la revendication 1, **caractérisée en ce que** l'aimant annulaire (42) est formé de plusieurs aimants permanents (43) qui sont tous dirigés vers le même pôle magnétique N de l'axe de mouvement (3).

3. Machine-outil (1) selon la revendication 1 ou 2, **caractérisée en ce qu'**un courant (48) alimentant la première bobine magnétique (46) et un courant (48) alimentant la seconde bobine magnétique (47) ont la même direction de rotation autour de l'axe de mouvement (3).

4. Machine-outil (1) selon l'une des revendications précédentes, **caractérisée en ce que** les bobines magnétiques (46, 47) sont commandées à phases alternées (68, 66) par une commande (12), et un premier champ magnétique (49) généré par la première bobine magnétique (46) à l'intérieur de la première bobine magnétique (46) est superposé de manière constructive au champ magnétique (37) de l'aimant annulaire (42) dans une première phase (68) et de manière destructive dans une seconde phase (66), et un second champ magnétique (50) généré par la seconde bobine magnétique (47) à l'intérieur de la seconde bobine magnétique (47) est superposé au champ magnétique (37) de l'aimant annulaire (42) de manière destructive dans la première phase (68) et de manière constructive dans la seconde phase (66).

5. Machine-outil (1) selon l'une des revendications précédentes, **caractérisée en ce que** le percuteur (4) est constitué d'un matériau magnétiquement doux.

6. Machine-outil (1) selon l'une des revendications précédentes, **caractérisée en ce que** le ressort pneumatique (23) est fermé par un obturateur fixe (30) dans une direction opposée à la direction de percussion (5).

7. Machine-outil (1) selon l'une des revendications précédentes, **caractérisée en ce que** l'enclume (13) fait saillie dans la seconde bobine magnétique (47) ou dans une culasse (57) adjacente à la seconde bobine magnétique (47) dans la direction de percussion (5).

8. Machine-outil (1) selon la revendication 7, **caractérisée en ce que** l'enclume (13) est constituée d'un matériau magnétiquement doux.

9. Machine-outil (1) selon l'une des revendications précédentes, **caractérisée en ce que**, dans chaque position, le percuteur (4) chevauche en partie au moins une des bobines magnétiques (46, 47) et en partie l'aimant annulaire (42).

10. Machine-outil (1) selon l'une des revendications précédentes, **caractérisée en ce qu'**une première longueur (52) de la première bobine magnétique (46) est plus petite qu'une seconde longueur (53) de la seconde bobine magnétique (47) et un rapport de la seconde longueur (53) sur la première longueur (52) est en particulier compris entre 1,75 et 2,25.

11. Machine-outil (1) selon l'une des revendications précédentes, **caractérisée en ce que** la première bobine magnétique (46), l'aimant annulaire (42) et la seconde bobine magnétique (47) sont agencés autour d'un tube de guidage (27) orienté coaxialement par rapport à l'axe de mouvement (3), et le ressort pneumatique (27) et le percuteur (4) sont agencés à l'intérieur du tube de guidage (27).
